# EUROPEAN PATENT APPLICATION

(11) **EP 1 617 431 A1**
(43) Date of publication of application: **18.01.2006**
(21) Application number: 04728461.7
(22) Date of filing: 20.04.2004
(51) Int. Cl.: G11B 20/10, H04N 5/91

(54) **INPUT DATA RECORDER AND INPUT DATA RECORDING METHOD**

(30) Priority: 23.04.2003 JP 2003117952; 11.03.2004 JP 2004068456
(71) Applicant: Konica Minolta Photo Imaging, Inc., Shinjuku-ku, Tokyo 163-0512 (JP)
(72) Inventor: UEDA, Yutaka, Hachioji-shi, Tokyo 192-8505 (JP); IGARASHI, Takashi, Hino-shi, Tokyo 191-8511 (JP)
(74) Representative: Gille Hrabal Struck Neidlein Prop Roos
(86) International application number: PCT/JP2004/005635
(87) International publication number: WO 2004/095451

(57) **Abstract**

An input data recording apparatus is provided with a data inputting section 7 for inputting image data, moving data image and music/sound data; a data edit section 8 for editing to display a slide show using the inputted data; a data conversion section 9 for converting the slide show data into the data of Video-CD format or DVD-Video format that can be reproduced by the image reproducing equipment 21 such as a DVD player and a game console; and a data transfer section 10/data recording section 11 for recording the aforementioned data and application on such a recording medium as a CD-R and DVD-R, with consideration given to the order of seeking data in the equipment, in such a way that they can be reproduced by computer equipment and image reproducing equipment.

## Description

### BACKGROUND OF INVENTION

The present invention relates to an input data recording apparatus and an input data recording method for recoding data on a disk-shaped recording medium used in computer equipment such as a personal computer, or image reproducing equipment such as a DVD player, a DVD recorder, and a game console, or sound reproducing equipment such as a CD player and a MP3 player.

Various services on photographic images are offered in recent years. For example, when a photographic image taken by a film camera is carried by a user into a photo service shop such as a laboratory or a store for receiving orders such as a convenience store, the photo service shop provides services of developing a negative, scanning the image data using a scanner or the like, and writing the scanned image data onto a recording medium such as a CD-R and DVD-R, whereby the recording medium is handed over to the user. In the case of a photographic image taken by a digital camera, services are provided to copy the image data recorded on (the digital camera or) a recording medium for the digital camera, onto a recording medium such as a CD-R and DVD-R(as exemplified in the disclosure of Japanese Patent Tokkaihei 1993-182373).

Such services allow a user to reproduce the photographic image using such computer equipment as a personal computer and ensure an effective display of the photographic image using slide show software. They also allows the image data to be organized in the form of an album using electronic album software, or permits the image data to be processed in various manners, for example, in conformity to the user's personal preference using image edit software.

### [Patent Document 1]

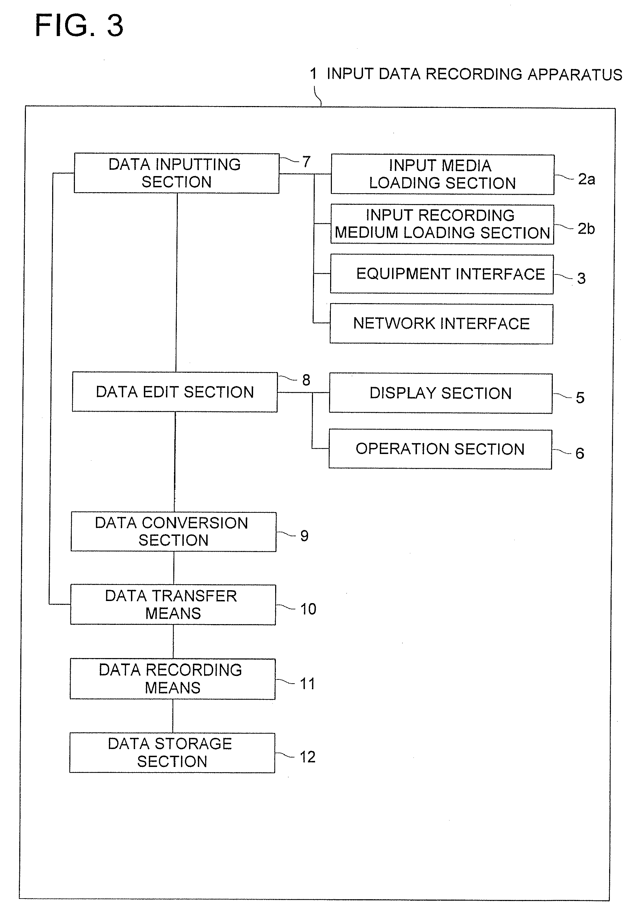

Official Gazette of Japanese Patent Tokkaihei 1993-182373 (Fig. 3 on pages 4 through 6)

However, the aforementioned service is based on the assumption that image data is reproduced on a personal computer. This requires a user be familiar with the operations of the personal computer to some extent. If a user is not familiar with the personal computer, he cannot view the photographic image easily when he has received a recording medium with image data recorded thereon. This has been a problem in encouraging use of the services.

In the meantime, the image reproducing equipment using a disk-shaped recording medium such as a DVD player, a DVD recorder and a game machine that has emerged in the market in recent years, and this image reproducing equipment reproduces an image and sound by simple operations as in the case of a general home electronic appliance. Further, images are reproduced in such a high definition that the image reproducing equipment has come into widespread use. However, such image reproducing equipment is designed to reproduce from the CD-R and DVD-R where data is recorded in the format unique to the equipment. It is not designed to reproduce the image data in JPEG format as a general format used to record a still image. Thus, the problem with the prior art is that the recording medium provided by the CD-R writing service cannot be used on the aforementioned image reproducing equipment.

When music/sound data is recorded on a recording medium using the aforementioned services or it is recorded on a recording medium at a rental shop, the recording medium can be played back by music reproducing equipment such as a CD player or MP3 player by recording the music/sound data in the Audio-CD, DVD-Audio or MP3 format. However, some image reproducing equipment is not compatible with the data of such format, and the recording medium obtained from such services cannot be utilized on the aforementioned image reproducing equipment, as in the case of image data. This has created a problem in the prior art.

### SUMMARY OF THE INVENTION

In view of the prior art described above, it is the major object of the present invention to provided an input data recording apparatus and input data recording method capable of recording the data in such a way that the image or sound can be reproduced by computer equipment such as a personal computer, or sound reproducing equipment such as a CD player and a MP3 player, or image reproducing equipment such as a DVD player, a DVD recorder, and a game console.

To achieve the aforementioned object, an input data recording apparatus provided by the present invention comprises an input section for inputting a data file of a specific type and data files of other types, and a data recording section for recording the aforementioned data file of a specific type and data files of other types on a disk-shaped recording medium, this input data recording apparatus characterized in that the aforementioned data recording section refers to the order of seeking the data in the equipment for reproducing the data file of a specific type, records the data of the data file of a specific type in the area that can be scanned by this equipment.

The input data recording apparatus of the present invention comprises an input section for inputting a data file of a specific type and data files of other types, and a data recording section for recording the aforementioned data file of a specific type and data files of other types on a disk-shaped recording medium, this input data recording apparatus characterized in that the aforementioned data file of a specific type is recorded in the area inside the area for recording the aforementioned data files of other types on the aforementioned disk-shaped recording medium.

In the input data recording apparatus of the present invention containing an input section for inputting a data file and a data recording section for recording a plurality of types of data files on a disk-shaped recording medium, wherein this data recording section refers to the order of seeking the data in the equipment for reproducing a specific type of data file, out of a plurality of types of the aforementioned data files, and records the data of the data file of a specific type in the area that can be scanned by the equipment.

In the input data recording apparatus of the present invention containing an input section for inputting a data file and a data recording section for recording a plurality of types of data files on a disk-shaped recording medium, the plurality of types of the aforementioned data files, contains a specific type of data file and other types of data file. The data recording section allows the data of the aforementioned specific types of data file to be recorded in the area inside the area for recording the other types of data files on the disk-shaped recording medium.

In the present invention, the aforementioned input data recording apparatus can be provided with a data conversion section for converting the inputted data file into the specific type of data file.

In the present invention, it is preferred that the aforementioned data file of a specific type contains at least one of the data file of Video-CD format, and the Video-CD format, and HDTV format, while the aforementioned data files of other types contains at least one of the data file that can be scanned by a computer and the data file regarding a music/sound data (for example, the data file such as Audio-CD format, DVD-Audio format, MP3 format, WAV format, WMA format, ATRAC format).

The present invention can be configured to contain a section for issuing an instruction signal for performing, in one operation, the processing including inputting of data file by the aforementioned input section, or inputting of data file by the aforementioned input section, conversion of the data file by the aforementioned data conversion section and recording of the data file onto the disk-shaped recording medium by the aforementioned data recording section.

The input data recording method of the present invention is a method for inputting a data file of a specific type and data files of other types, and for recording the aforementioned data file of a specific type and data files of other types on a disk-shaped recording medium, the aforementioned input data recording method characterized in that the data files of other types are recorded on the aforementioned disk-shaped recording medium after the aforementioned data file of a specific type for which the area that can be scanned by the equipment for reproducing the data file is restricted.

The input data recording method of the present invention is a method for inputting a data file of a specific type and data files of other types, and for recording the aforementioned data file of a specific type and data files of other types on a disk-shaped recording medium, the aforementioned input data recording method characterized in that the aforementioned data file of a specific type is recorded in the area inside the area for recording the aforementioned data files of other types on the aforementioned disk-shaped recording medium.

The input data recording method according to the present invention provides a data recording method for recording a plurality of types of data files on one disk-shaped recording medium. Of the aforementioned plurality of types of data files, the aforementioned specific type of data file, for which the area that can be scanned by the equipment for reproducing the data file is restricted, is first recorded on the disk-shaped recording medium. After that, other types of the data files are recorded.

The input data recording method according to the present invention provides a data recording method for recording a plurality of types of data files on one disk-shaped recording medium. The aforementioned plurality of types of data files contain the specific type of data file and other types of data files. The data of the aforementioned specific type of data file is recorded in the area inside the area for recording the other types of data files on the disk-shaped recording medium.

As described above, according to the arrangement of the present invention, the data files for a still image data, moving image data and music/sound data of the format that can be reproduced by computer equipment such as a personal computer (other types of data files), and data files of the format that can be reproduced by such image reproducing equipment as a DVD player, DVD recorder and game machine (a specific type of data file), as well as application and content as required, are recorded at predetermined positions of the disk-shaped recording medium such as a CD-R/RW, DVD±R/RW, DVD-RAM and Blu-ray disk in such a way that they can be reproduced by respective equipment. Because of this arrangement, a user unfamiliar with the operation of a personal computer can easily reproduce the image data using an image reproducing equipment. Further, this arrangement allows the image data to be displayed, edited and processed by a user familiar with the operation of a personal computer, using various applications. Thus, the present invention provides a recording medium that can be employed by a great variety of users.

Further, according to another arrangement of the present invention, the data files (other types of data files) of the format that can be reproduced by music reproducing equipment such as CD player and MP3 player and the data files (specific type of data file) that can be reproduced by image reproducing equipment such as DVD player, DVD recorder and game machine, as well as application and content as required, are recorded at predetermined positions of the disk-shaped recording medium in such a way that they can be reproduced by respective equipment. Because of this arrangement, some users wishing to enjoy music with moving images using image reproducing equipment can easily use the image reproducing equipment to play back the moving image. Other uses wishing to enjoy only music can easily use music reproducing equipment to play back the music/sound data. Thus, the present invention provides a recording medium that can be employed by a great variety of users.

A recording medium with a desired data file recorded thereon can be easily created by providing the input data recording apparatus with a means for issuing the instruction signal for implementing, in one operation, the processing including input of the data file group or input of the data file and conversion of the data file, and recording on the recording medium.

### BRIEF DESCRIPTION OF THE DRAWINGS

Fig. 1 is an external view representing one configuration of an input data recording apparatus as an example 1 of the present invention.
Fig. 2 is an external view representing another configuration of an input data recording apparatus as an example 1 of the present invention.
Fig. 3 is a block diagram representing the function of an input data recording apparatus as an example 1 of the present invention.
Fig. 4 is a flowchart showing one procedure of the input data recording method as an example 1 of the present invention.
Fig. 5 is a flowchart showing another procedure of the input data recording method as an example 1 of the present invention.
Fig. 6(a) is a diagram showing the configuration of the folder of an output recording medium created by an input data recording apparatus as an example 1 of the present invention.
Fig. 6(b) is a diagram showing the configuration of the folder of an output recording medium created by an input data recording apparatus as an example 1 of the present invention.
Fig. 7 is a diagram schematically showing the data storage area in an output recording medium created by an input data recording apparatus as an example 1 of the present invention.
Fig. 8 is an external view representing another configuration of an input data recording apparatus as an example 1 of the present invention.
Fig. 9 is an external view representing another configuration of an input data recording apparatus as an example 1 of the present invention.
Fig. 10 is an external view representing another configuration of an input data recording apparatus as an example 1 of the present invention.
Fig. 11 is an external view representing another configuration of an input data recording apparatus as an example 1 of the present invention.
Fig. 12 is an external view representing another configuration of an input data recording apparatus as an example 1 of the present invention.
Fig. 13 is an external view representing one configuration of an input data recording apparatus as an example 2 of the present invention.
Fig. 14 is a flowchart showing one procedure of the input data recording method as an example 2 of the present invention.
Fig. 15 is a diagram schematically showing the data storage area in an output recording medium created by an input data recording apparatus as an example 2 of the present invention.
Fig. 16 is a diagram schematically showing the data storage area in an output recording medium created by an input data recording apparatus as an example 2 of the present invention.
Fig. 17 is a diagram schematically showing the data storage area in an output recording medium created by an input data recording apparatus as an example 2 of the present invention.

### DETAILED DESCRIPTION OF THE PREFERRED EMBODIMENT

As shown in the description of the prior art, services are provided to record the image data captured by a film camera or digital camera, on the recording medium such as a CD-R and DVD-R. Use of these services allows the image data to be displayed in the form of a slide on the personal computer or organized in the form of an album. It also permits the image data to be processed in various manners, for example, in conformity to the user's personal preference. Thus, highly valuable services are offered to a user familiar with the operation of a personal computer.

In the meantime, the DVD player, DVD recorder, and game console do not require such as complicated operations as the personal computer, and allows data to be reproduced easily and to be viewed at a high definition on a television monitor. The data that can be reproduced by a DVD player, DVD recorder, and game console is only the data that has been recorded in a special format; therefore, the photographic image recorded on the recording medium offered by the aforementioned CD-R write service cannot be displayed.

As described above, the users employing the image data include diverse types of people; those employing a personal computer to reproduce image data through the use of applications, and those using the DVD player, DVD recorder, game console to reproduce the image data by a simple operation. To put the aforementioned CD-R write service into widespread use, it is necessary to permit photographic images to be used over an extensive range in response to varied user requirements.

Similar problems to those mentioned above arise between the image reproducing equipment and music reproducing equipment such as a CD player and MP3 player. Music/sound data such as the Audio-CD format, DVD-Audio format, MP3 format, WAV format, WMA format or triple-play format as a general format for music/sound data can be reproduced by the music reproducing equipment, but not by the image reproducing equipment. Accordingly, in order to achieve widespread use of music-related services, it is essential to meet a great variety of user requirements so that music can be enjoyed over an extensive range.

The present invention is provided with: a data input section for inputting into the input data recording apparatus various types of data including: image data captured by photographic equipment such as a digital camera and a camera-equipped cellular phone; image data recorded on the recording medium; an image data obtained by scanning a photographic film; moving image data; and music/sound data; a data edit section for editing the inputted image data so as to display it in a slide show as required; a data conversion section for converting the slide show data edited by the data edit section and inputted moving image, into the data of Video-CD format, DVD-Video format and HDTV format that can be reproduced by such image reproducing equipment as a DVD player, DVD recorder and game machine, and for converting the inputted music/sound data into the data of the Audio-CD format, DVD-Audio format, MP3 format, WAV format, WMA format or triple-play format that can be reproduced by such music reproducing equipment as a CD player and MP3 player; a data transfer section/data recording section for recording the aforementioned data, application and content on the recording medium such as a CD-R/RW, DVD±R/RW, DVD-RAM and Blu-ray disk, with consideration given to the order of seeking data in the equipment, in such a way that they can be reproduced by different types of equipment such as computer equipment or music reproducing equipment and image reproducing equipment. This arrangement allows the image based on image data and music based on music/sound data to be reproduced by using any of the computer equipment, music reproducing equipment and image reproducing equipment, thereby meeting various user requirements. Further, an output recording medium with a desired data file recorded thereon can be easily created by providing the input data recording apparatus with a means (button displayed on the main menu screen, physical special-purpose button, etc.) for issuing the instruction signal to implement, in one operation, a series of processing including the input and recording of data. The following describes the details of the preferred embodiments of the present invention with reference to drawings. In the first embodiment, description will be given of the method of creating a recording medium that can be reproduced by both the personal computer and image recording apparatus. In the second embodiment, description will be given of the method of creating a recording medium that can be reproduced by both the music reproducing equipment and image reproducing equipment.

### [Example 1]

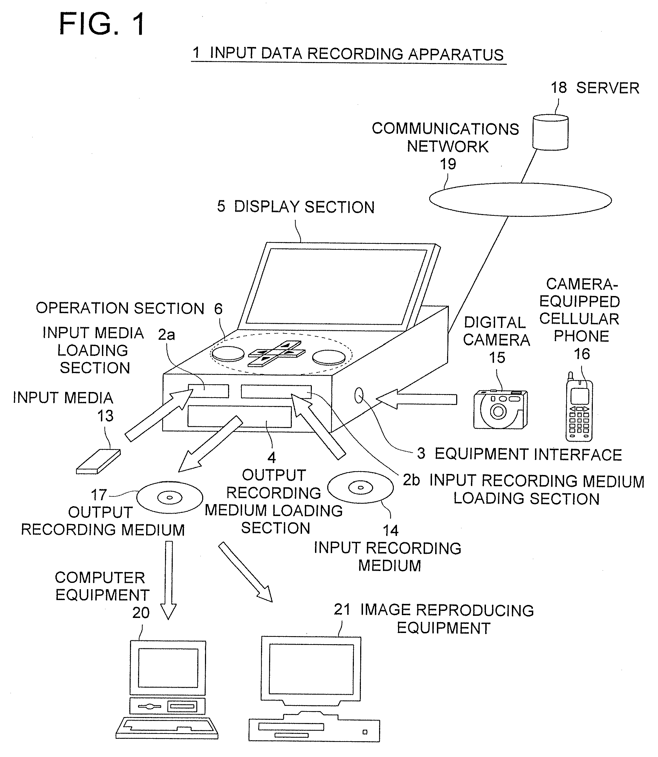

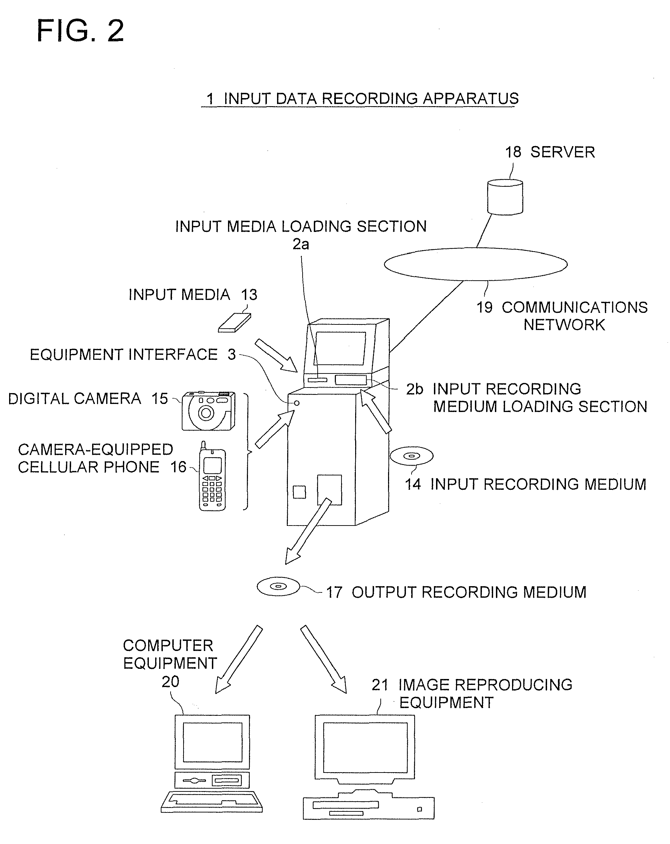

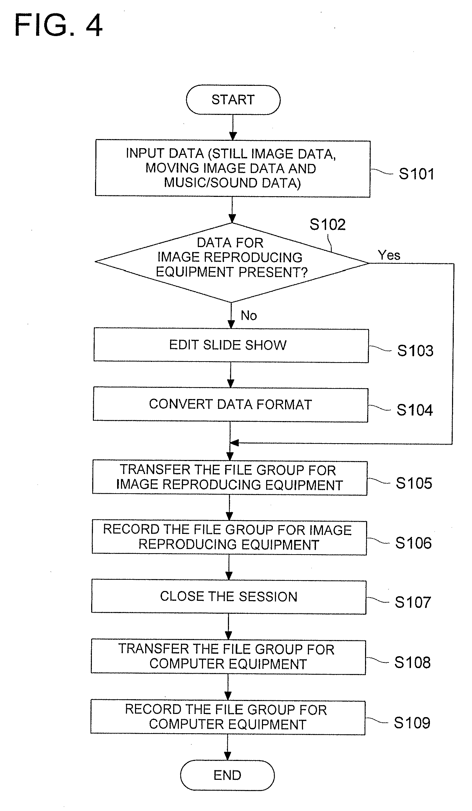

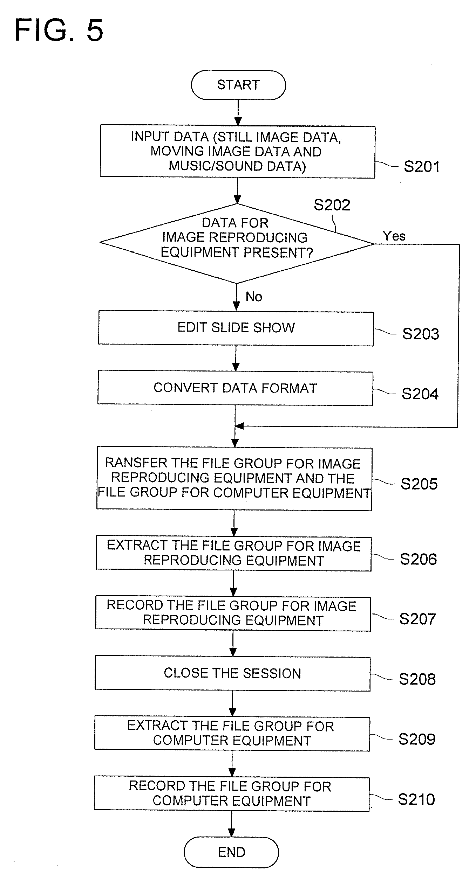

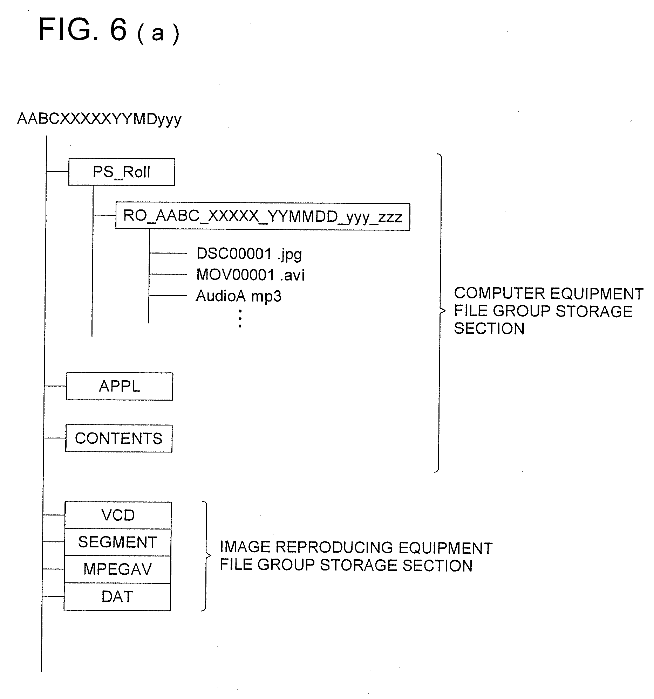

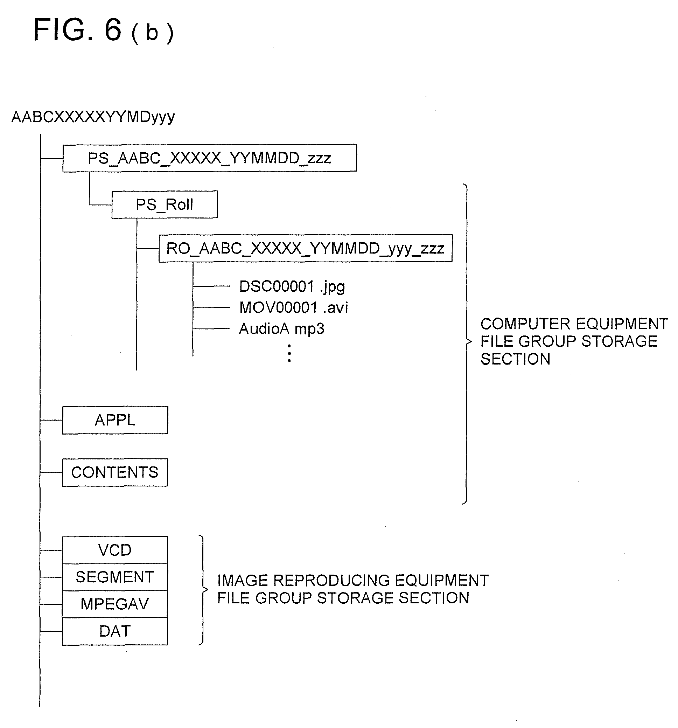

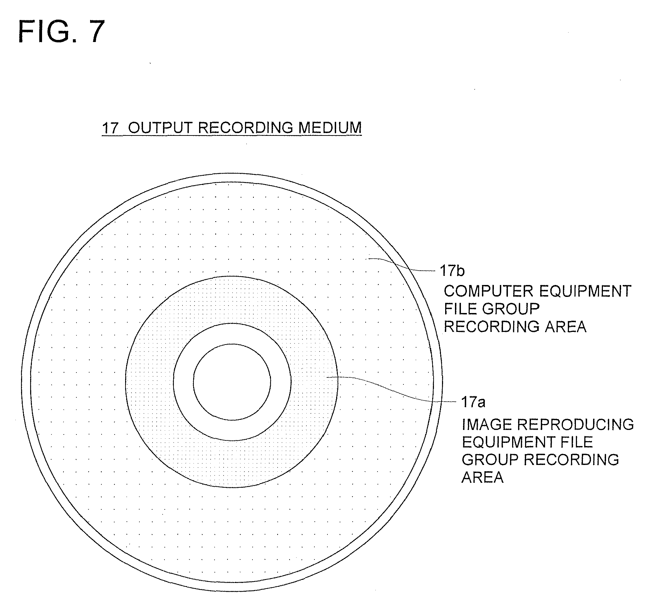

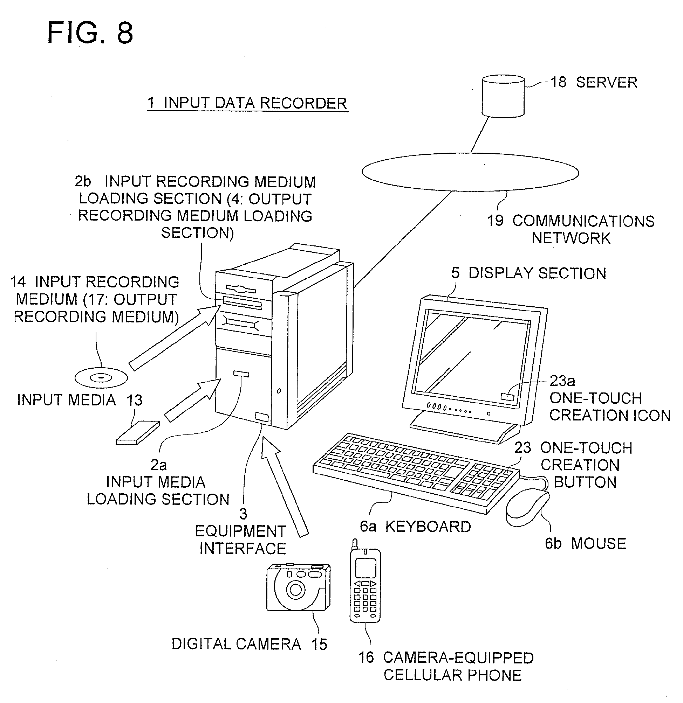

To give more detailed description of the present invention, the following describes the input data recording apparatus and input data recording method as one embodiment of the present invention with reference to Figs. 1 through 12: Figs. 1 and 2 are schematic diagrams representing the input data recording apparatus of the present invention. Fig. 3 is a block diagram representing the function of the input data recording apparatus. Figs. 4 and 5 are flowcharts representing the procedures of the input data recording method in the present embodiment. Fig. 6 is a diagram showing the folder configuration of a recording medium. Fig. 7 is a drawing representing the data recording area in the recording medium. And Fig. 8 through 12 are schematic diagram representing another configuration of an input data recording apparatus of the present invention.

It should be noted that the term "image data" used in the following description refers to generic term of the image information includes "still image data" and "moving image data". The "still image data" is one independent image data item, depending on the file format, all pixel data is written as it is, or compressed data without redundancy is written in some cases. For example, the common data of the format that can be displayed by such computer equipment as a personal computer is the data compressed in the JPEC format. The format that can be reproduced by such image reproducing equipment as a DVD player, a DVD recorder, and a game console includes the Video-CD format, DVD-Video format, or HDTV format. Files compressed in other formats or non-compressed files can also be used.

Further, "moving image data" can be defined as the data whose image is switched and displayed at a predetermined interval. For example, in the MPEG file or the like, image data as a reference is written as independent data. This alone permits image reproduction but, after that, only the difference from the reference image is recorded; therefore, the image is reproduced only by comparison with the reference image.

Firstly, the configuration of the input data recording apparatus as an example 1 of the present invention will be described with reference to Fig. 1. The input data recording apparatus 1 as an embodiment of the present invention comprises: an input media loading section 2a for loading a recording medium (hereinafter referred to as "input media 13") for recording the image data of the smart media, Compact Flash (registered trademark), Memory Stick (registered trademark), SD memory card, multi-media card and the like; an input recording medium loading section 2b for loading an input recording medium 14 used to record the image data obtained by scanning a photographic film; an equipment interface 3 for reading image data by means of wire, radio or infrared from the photographic equipment (the digital equipment with camera function is hereinafter referred to as "photographic equipment") such as a digital camera 15 and camera-equipped cellular phone 16; a data input section including a network interface as an interface with other computer and server 18 through a communications network 19 as required; an output recording medium loading section 4 for loading a output recording medium 17 such as CD-R/RW, DVD±R/RW, DVD-RAM, and Blu-ray disk used to record the image data scanned from the aforementioned recording medium and photographic equipment; an operation section 6 for performing such operation as setting of a slide show; and a display section 5. Further, a one-touch creation button 23 (a physical special-purpose button; one-touch icon 23a or the like can be displayed on the screen of the display section 5) for issuing the instruction signal to implement, in one operation, a series of processing including input through recording of data is provided at a desired position of the input data recording apparatus.

Fig. 3 is a block diagram representing the functions of the input data recording apparatus 1. It contains: an input media loading section 2a; an input recording medium loading section 2b; an equipment interface 3; a data inputting section 7 for inputting the still image data, moving data image and music/sound data can be reproduced by computer equipment 20 using a network interface or the like; a data edit section 8 for editing to display a slide show using the still image data, moving image data and music/sound data having been inputted by the display section 5 and operation section 6; a data conversion section 9 for converting the edited slide show data into the data of Video-CD format, DVD-Video format, or HDTV format that can be reproduced by the image reproducing equipment 21 such as a DVD player, a DVD recorder, and a game console; a data transfer section 10 for controlling the sequence of recording so that inputted data, converted data, application, content and other data can be reproduced by both the computer equipment 20 and image recording apparatus 21; a data recording section 11 for writing on the output recording medium 17 the data having been transferred by the data transfer section 10; and a data storage section 12 for storing the application program including the slide show program for reproducing the slide show using the inputted data, and the content related to the inputted data.

For the simplicity of explanation, the data transfer section 10 and data recording section 11 are described as being independent sections, but they can be configured as one integral section. In the present embodiment, the input data recording apparatus 1 is described as an apparatus for providing integrated processing of data input, edit, conversion and recording. The input data recording apparatus 1 of the present invention is only required to have the function that ensures that the inputted data can be reproduced by both the computer equipment 20 and input data reproducing apparatus 21. It is sufficient if the input data recording apparatus is equipped with at least the data inputting section 7, data transfer section 10 and data recording section 11 out of the aforementioned sections.

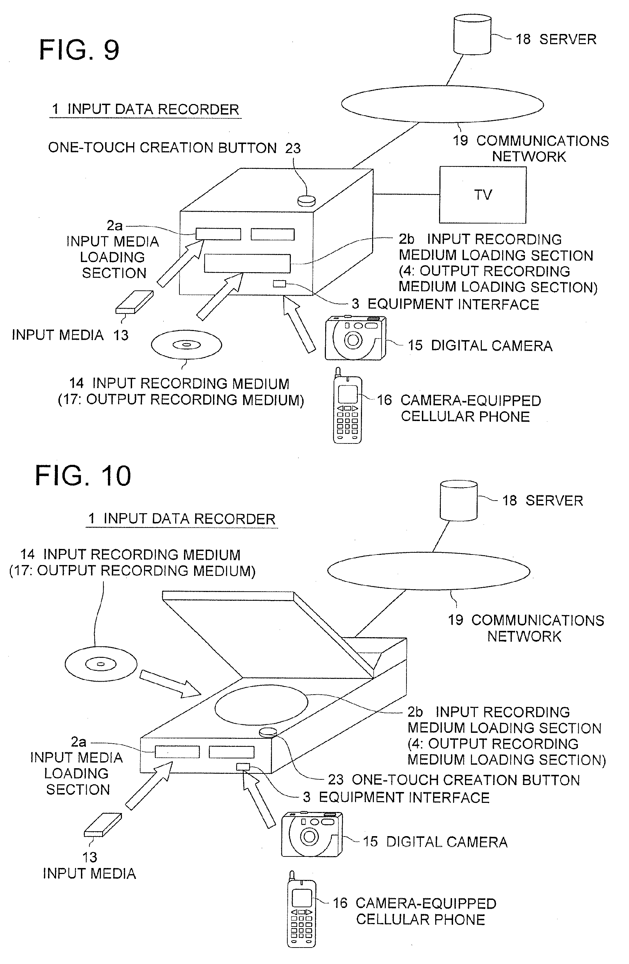

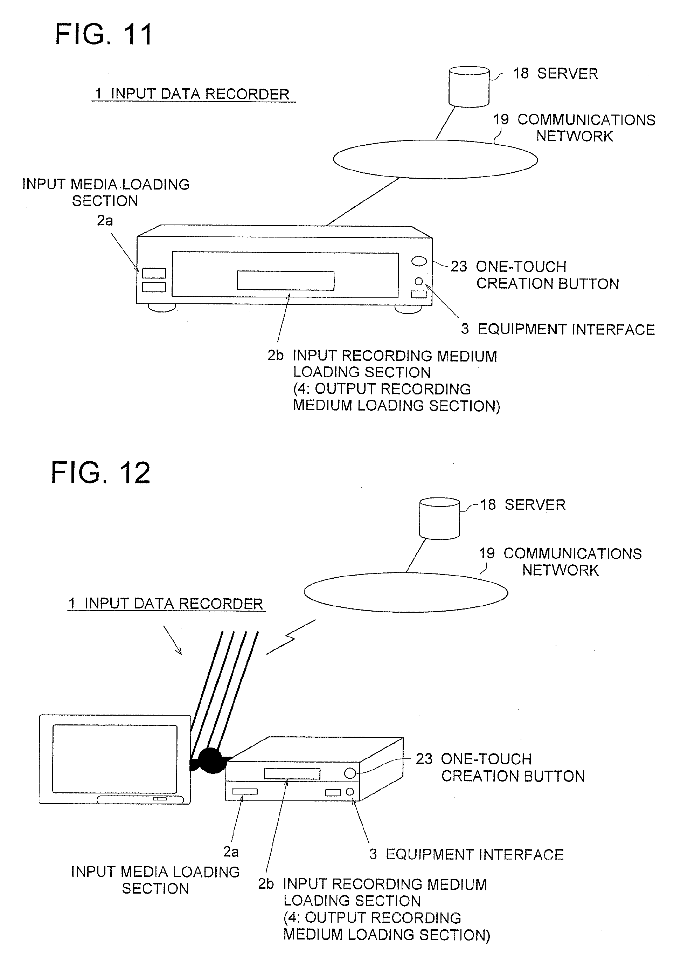

Fig. 1 shows a desktop type input data recording apparatus 1. The input data recording apparatus 1 can be designed in any desired configuration. For example, it can be a kiosk type apparatus that can be installed in a convenience store, as shown in Fig. 2. It is also possible to use a personal computer equipped with the aforementioned means as shown in Fig. 8, a special-purpose set top box as shown in Fig. 9 or a portable writer as shown in Fig. 10. Further, it is also permitted to use a DVD recorder or HDD recorder equipped with a storage section and computing section, as shown in Fig. 11, or a car navigation apparatus, as shown in Fig. 12. In the present embodiment, the input data recording apparatus 1 is described as an apparatus operating as a single unit, but it can be integrated with an apparatus for developing a negative film or an apparatus for reading image information by scanning the developed photographic film, for example.

Using the input data recording apparatus 1 of the aforementioned configuration, the following describes the procedure from inputting of the data to recording of data on the output recording medium 17, with reference to the flowchart of Fig. 4:

In Step S101, the input media 13 with data written thereon and the input recording medium 14 such as CD-R/RW, DVD±R/RW, DVD-RAM, and Blu-ray disk are loaded in the input media loading section 2a or input recording medium loading section 2b of the input data recording apparatus 1; or photographic equipment such as the digital camera 15 or camera-equipped cellular phone 16 is connected to the equipment interface 3 or to other computer equipment and server 18 through the communications network 19, using the network interface. Through such various methods, desired data is inputted using the data inputting section 7.

Here the inputted data is not restricted to the still image data. It may contain the moving image data and music/sound data that are reproduced when such data is displayed in a slide show. Further, the input data recording apparatus 1 is equipped with a function of converting the data of the format conforming to the computer equipment 20, into the data of the format conforming to the input data reproducing apparatus 21. Accordingly, the configuration can be designed in such a way that only the data of the format for the data reproducing apparatus 21 is inputted from the data inputting section 7. It is also possible to arrange such a configuration that the data of the format for the data reproducing apparatus 21 is inputted concurrently. The data of any desired format can be used if it can be read by the computer equipment 20; for example, in the case of the still image data for the computer equipment 20 such as JPEG, BMP, JIF, TIFF, Exif, RAW, and an after recording data is associated with the still image data (such as JPEG+WAV), in the case of the moving image data such as AVI, MOV, MPEG, and WMA.

In Step S102, evaluation is made to determine whether or not the data of the format compatible with the data reproducing apparatus 21 is contained in the inputted data. If it is contained, processing of the Step S105 and thereafter is applied.

If the data of the format compatible with the data reproducing apparatus 21 is not contained in the inputted data, and the inputted data is to be reproduced as a slide show, a predetermined slide show setting screen is displayed on the display section 5 using the data edit section 8 in Step S103. Then the operation section 6 is used to select the image data for slide display, to set the display sequence, to select the music/sound data, to set the slide effect and to select the moving image data to be reproduced together with the slide show. The setting data with the slide show setting conditions recorded thereon is created in order to allow the slide show to be reproduced by the computer equipment 20.

In Step S104, the data conversion section 9 creates the moving image data from the still image data under the setting conditions edited by the data edit section 8 and converts it into the format that can be read by the data reproducing apparatus 21 such as a DVD player and DVD recorder (Video-CD format, DVD-Video format, or HDTV format). The method of creating this still image data is not placed under any restriction. For example, this data can be generated by adding the differential data based on the predetermined slide effect to the still image data.

Then computer equipment data and image reproducing equipment data are written. The computer equipment 20 can read regardless of where in the output recording medium 17 the data has been written. In the case of the data reproducing apparatus 21 such as a DVD player, a DVD recorder, and a game console, the data seek order (i.e. order of data reading) is preset. Data cannot be read by the data reproducing apparatus 21, depending on the area where the data is recorded. To avoid this problem, in the present embodiment, the order of recording is controlled in such a way that the data for image reproducing equipment can be recorded on the predetermined area (inside in the case of the disk-shaped recording medium in general).

To put it more specifically, in Step S105, the data transfer section 10 transfers the application and associating data (hereinafter collectively referred to as "image reproducing equipment file group") for reproducing the moving image data and still image data for data reproducing apparatus 21 created by the data conversion section 9, to a predetermined file for writing provided in the data storage section 12 in advance. Then in Step S106, the data recording section 11 reads the image reproducing equipment file group from this folder and records it in the area (image reproducing equipment file group recording area 17a) inside the output recording medium 17 such as CD-R/RW, DVD±R/RW, DVD-RAM, and Blu-ray disk loaded in the output recording medium loading section 4, as shown in Fig. 7. It should be noted that the output recording medium 17 of the Video-CD format can be created by using MPEG1 as an image format of the moving data and recording it on the CD-R. The output recording medium 17 of the DVD-Video format can be created by using the MPEG2 as the image format of the moving image data and recording it on the DVD-R. It is also possible to arrange such a configuration that the user can select the format to which the data is to be converted, and the type of the output recording medium 17 where the data is to be recorded.

In the next Step S107, before recording the data for computer equipment 20, the data recording section 11 closes the session to classify the area of the data that can be used by the data reproducing apparatus 21.

In the next Step S108, the data transfer section 10 transfers the application for slide show display of the still image data, moving image data and music/sound data for the computer equipment 20 inputted by the data inputting section 7 and the slide show setting data (hereinafter referred to correctively as "a computer equipment file group), to the predetermined folder for writing preset on the data storage section 12. In the next Step S109, the data recording section 11 reads the computer equipment file group from this folder, and records it on the area (computer equipment file group recording area 17b) outside the image reproducing equipment file group previously recorded on the output recording medium 17, as shown in Fig. 7.

The output recording medium 17 where the data and program have been written according to the aforementioned procedure appears as shown in Fig. 6(a), for example. It contains the image reproducing equipment file group storage section storing the data and application for reproduction by the data reproducing apparatus 21, and the computer equipment file group storage section for storing the data and application for reproduction by the computer equipment.

The image reproducing equipment file group storage section contains a folder (DAT) for storing the application used to display the still image data on the TV screen; a folder (MPEGAV) for storing the moving image data generated based on the still image data; a folder (SEGMENT) for storing the image data to be displayed on the TV screen; and a folder (VCD) for storing the file used to associate the image data as a data of Video-CD format, DVD-Video format, or HDTV format.

The computer equipment file storage section contains a folder (PS_Roll) for collective management of various types of data; an application storage section (APPL) for storing an application such as a slide show program; and a special-purpose content storage section (CONTENTS) for storing the special-purpose content such as design. The sub-folder (RO folder) for storing data for each medium, for each device, and for each lot is formed on the lower level of the PS_Roll. This sub-folder stores the still image data (DSC00001.jpg, etc.), moving image data (MOV00001.avi, etc.) generated on the basis of the still image data and music/sound data (AudioA.mp3) to be reproduced during slide show.

The folder configuration shown in Fig. 6(a) is only an example. The application and special-purpose content are not always necessary. It is also possible to include an information file or execution file for recognition of the data recorded on the output recording medium 17 by a personal computer and automatic reproduction thereof. Further, the thumbnail data and screen-nail data corresponding to the still image data can be included in the folder that stores data for each lot, or the music/sound data reproducible as background music for the TV slide show can be contained in the image reproducing equipment file group storage section.

To facilitate the management of the image data, it is also possible to make such arrangements that a folder is configured according to the predetermined rule, is assigned with a unique name and is recorded. For example, as shown in Fig. 6 (a), the RO folder can be assigned with the name "RO_AABC_XXXXXX_YYMMDD_yyy_zzz" (AA: code name of the nation (00 through ZZ), B: code number of the region (O through Z), C: code number showing how to create the recording medium (e.g. "k" when created in a kiosk, "L" when created in a laboratory), XXXXX: random ID number, yymmdd: numerals to specify year, month and day, zzz: sequential number for each specified unit (e.g. for each film, medium and equipment)). As shown in Fig. 6 (b), it is also possible to create a folder (PS_AABC_YYMMDD_zzz) showing the storage location of the image data having shifted to the position higher than the PS folder. This configuration further facilitates the image data management.

The aforementioned input data recording procedure applies to the case where the data transfer section 10 controls the order of transferring the image reproducing equipment file group and computer equipment file group. It is also possible to arrange such a configuration that these data items are transferred concurrently, and the data recording section 11 controls the order of writing by turns. The procedure in this case will be described with reference to the flowchart of Fig. 5.

In a manner similar to the aforementioned procedure, in Step S201, the data input section 7 is used to input desired data from the input media loading section 2a, input recording medium loading section 2b, equipment interface 3 and network interface. Evaluation is made to determine whether or not the data of the format compatible with the data reproducing apparatus 21 is contained in the inputted data in Step S202. If it is contained, in Step S203, the data edit section 8 is used to select the image data for slide display, to set the display sequence, to select the music/sound data, to set the slide effect and to select the moving image data to be reproduced together with the slide show. Then in Step S204, a moving image is created from the still image data and is converted into the format (Video-CD, DVD-Video, HDTV or other format) that can be read by the data reproducing apparatus 21.

In the next Step S205, the data transfer section 10 ensures that the image reproducing equipment file group converted by the data conversion section 9 and computer equipment file group inputted by the data inputting section 7 are stored in a predetermined file for writing previously provided in the data storage section 12. Then in Step S206, the data recording section 11 extracts the image reproducing equipment file group from the data recorded in this folder. In the next Step S207, the image reproducing equipment file group is written in the area inside the output recording medium 17, with consideration given to the order of seeking the data in the data reproducing apparatus 21.

In the next Step S208, the data recording section 11 closes the session, and in the next Step S209, extracts the computer equipment file group stored in the writing folder. In Step S210, the computer equipment file group is written into the area outside the area where the image reproducing equipment file group of the output recording medium 17 is written. This procedure makes it possible to create the output recording medium 17 that can be reproduced by the computer equipment 20 and data reproducing apparatus 21.

It is also possible to make such arrangements that, at the time of processing such as data input, slide show edit or data format conversion, the status of processing is displayed on the display section 5 of the input data recording apparatus 1, and the processing is applied sequentially by operating the operation section 6. However, if the operation becomes complicated, the input data recording apparatus 1 may not be used. To solve this problem, it is also possible to provide a one-touch creation button 23, shown in Figs. 1, 2, 8 through 12, at a desired position of the operation section 6 or display section 5 of the input data recording apparatus 1. If this one-touch creation button 23 is pressed, the image data is scanned automatically from the input media 13 loaded in the input media loading section 2a, the input recording medium 14 loaded in the input recording medium loading section 2b and the digital camera 15 connected to the equipment interface 3. The moving image for the slide show is created under predetermined conditions and is converted into a predetermined format. After that, the instruction signal is issued to control each section so as to record in the predetermined area of the output recording medium 17. After the input media 13 has been loaded in Steps S101 and S201, it is possible to create the output recording medium 17 that can be reproduced by both the computer equipment 20 and image recording apparatus 21, merely by pressing the one-touch creation button 23.

The input data recording apparatus 1 of the present invention provides control with consideration given to the order of seeking data in the equipment. For example, in the case of the DVD player, DVD recorder and others where the data is read from the inside of the disk-shaped recording medium, the image reproducing equipment file group is first in the area inside the output recording medium 17; then the computer equipment file group is written in the outside area. This arrangement allows the user to employ the output recording medium 17 to view the slide show of the still image data as well as moving image through both the data reproducing apparatus 21 and computer equipment 20, thereby ensuring more extensive use of photographic images.

### [EMBODIMENT 2]

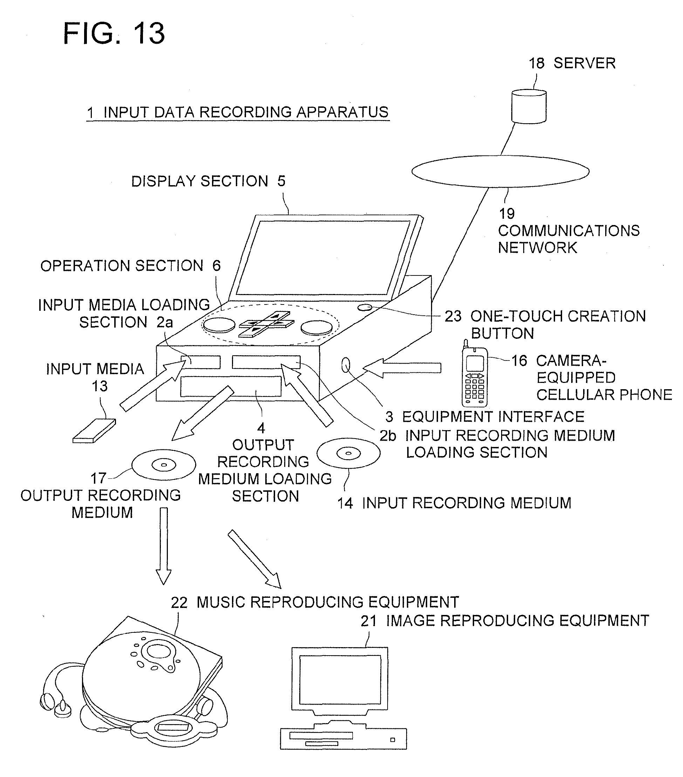

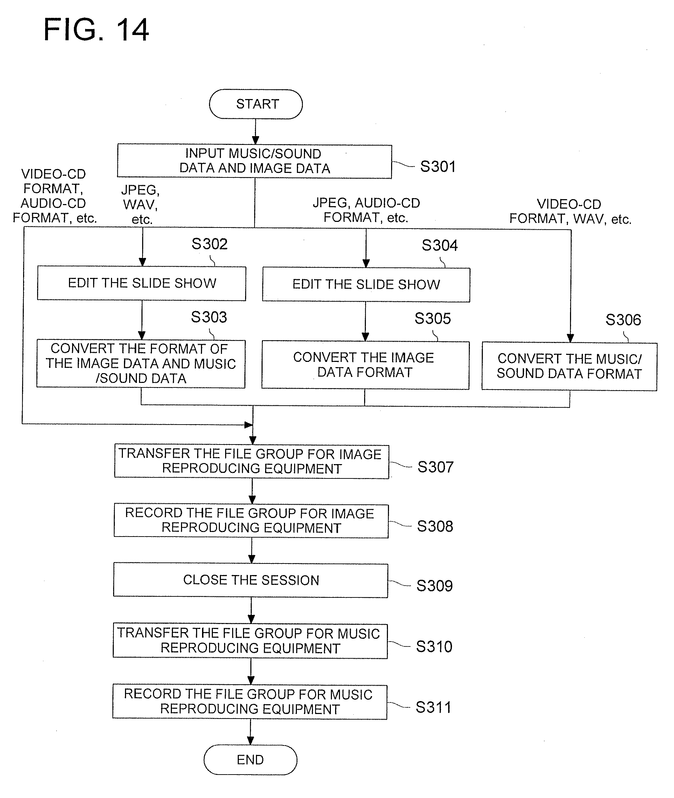

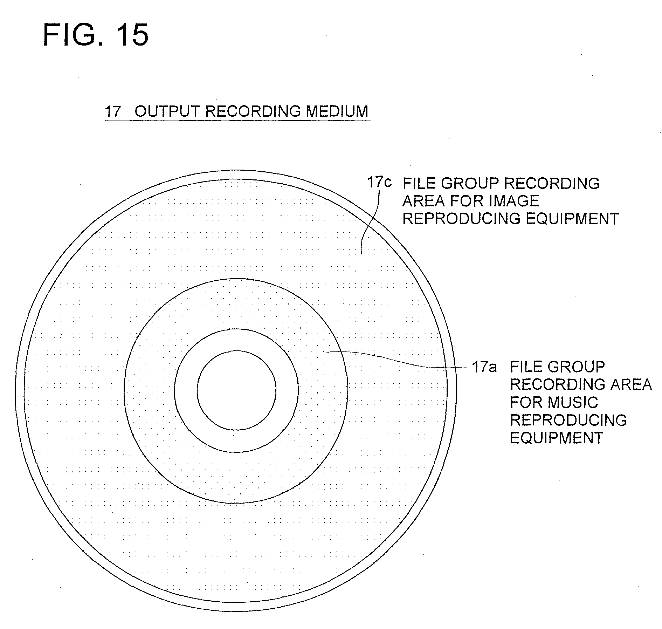

Referring to Figs. 13 through 17, the following describes the input data recording apparatus and input data recording method related to the second embodiment of the present invention: Fig. 13 is a diagram schematically representing the configuration of the input data recording apparatus as a second embodiment of the present invention. Fig. 14 is a flowchart showing the procedure in input data recording method of the present embodiment. Figs. 15 through 17 show the data recording area in the recording medium.

Referring to Fig. 13, the following describes the configuration of the input data recording apparatus of the present embodiment: The input data recording apparatus 1 as an embodiment of the present invention comprises:
an input media loading section 2a for loading a recording medium 13 for recording the image data and music/sound data of the smart media, Compact Flash (registered trademark), Memory Stick (registered trademark), SD memory card, multi-media card and the like;
an input recording medium loading section 2b for loading an input recording medium 14 for recording the music/sound data;
an equipment interface 3 for scanning image data and music/sound data by means of wire, radio or infrared from portable equipment such as camera-equipped cellular phone 16;
a data input section including a network interface as an interface with other computer and server 18 through a communications network 19 as required;
an output recording medium loading section 4 for loading a output recording medium 17 such as CD-R/RW, DVD±R/RW, DVD-RAM and Blu-ray disk for recording the image data and music/sound data scanned from these recording media and portable equipment, after converting it or otherwise;
an operation section 6 for performing such operation as setting of a slide show; and
a display section 5.

Further, at a desired position of the input data recording apparatus, there is a one-touch creation button 23 (a physical special-purpose button; one-touch icon 23a or the like can be displayed on the screen of the display section 5) for issuing the instruction signal to implement, in one operation, a series of processing including input through recording of data.

The input data recording apparatus 1 contains the same functions as that of the first embodiment. It comprises:
a data input section 7 for inputting the still image data, moving image data and music/sound data providing as a basis for the data to be reproduced by music reproducing equipment 22 such as a CD player and MP3 player, and by image reproducing equipment 21 such as DVD player, DVD recorder and game machine, using the input media loading section 2a, input recording medium loading section 2b, equipment interface 3 and network interface;
a data edit section 8 for editing to display a slide show using the still image data, moving image data and music/sound data having been inputted, as required, by the display section 5 and operation section 6;
a data conversion section 9 for converting the moving image data of the edited slide show and the inputted moving image data into the data of Video-CD format, DVD-Video format and HDTV format that can be reproduced by image reproducing equipment 21, and for converting the inputted music/sound data into the data of the Audio-CD format, DVD-Audio format and MP3 format that can be reproduced by the music reproducing equipment 22;
a data transfer section 10 for controlling the order of recording so that the inputted data, converted data, application data and content data can be reproduced by both the image reproducing equipment 21 and music reproducing equipment 22;
a data recording section 11 for writing the data transferred by the data transfer section 10, on the output recording medium 17; and
a data storage section 12 for storing the application program and the content related to the inputted data.

In this embodiment, the configuration of the input data recording apparatus 1 can be arranged as desired. It can be designed, for example, as a kiosk-type apparatus that can be installed in a rental shop or convenience store. Alternatively, it can be configured as a personal computer equipped with the aforementioned means, a special-purpose set top box, a portable writer, a DVD recorder, HDD recorder or car navigation apparatus equipped with storage and computation means.

Using the input data recording apparatus 1 designed in the aforementioned configuration, the following describes the procedure from entry of the data to the recording of the data on the output recording medium 17, with reference to Fig. 14.

In Step S301, desired data is inputted from the data input section 7 by:
loading the input media 13 with data written on the input media loading section 2a and input recording medium loading section 2b of the input data recording apparatus 1, or the input recording medium 14 loaded with the input recording medium 14 such as CD-R/RW, DVD±R/RW, DVD-RAM and Blu-ray disk;
connecting the photographic equipment such as the digital camera 15 and camera-equipped cellular phone 16 to the equipment interface 3; or
connecting with other computer equipment and server 18 through the communications network 19, using the network interface.

The data to be inputted here can be configured to allow direct inputting of the following data:
music/sound data reproduced by the music reproducing equipment 22; or
music/sound data used to create moving image data reproduced by the image reproducing equipment 21 (e.g. data in the format of Audio-CD, DVD-Audio, MP3, WAV, WMA or triple-play); and
still image data and moving image data used to create the moving image data reproduced by the image reproducing equipment 21 (e.g. still image data in the format of JPEG, BMP, JIF, TIFF, Exif, RAW, data with dubbing; and moving image data in the format of AVI, MOV, MPEG1, 2, 4 and 7, WMV).

The following processing is applied according to the type of the inputted data: It should be noted that there is a difference in the type of data that can be reproduced, depending on the type of the music reproducing equipment 22 (or image reproducing equipment 21). There is no clear separation between the data that can be reproduced by the music reproducing equipment 22 (or image reproducing equipment 21) and the data that cannot. The following classification is only an example.

The first embodiment refers to the case where the inputted image data and music/sound data of the format cannot be reproduced by the image reproducing equipment 21 or music reproducing equipment 22 without conversion (both the data that cannot be reproduced by the image reproducing equipment 21 and the data that cannot be reproduced by music reproducing equipment 22; e.g. image data in the format of JPEG, BMP, JIF, TIFF, Exif, RAW, data with dubbing, AVI, MOV, MPEG1, 2, 4 and 7, WMV; and music/sound data in the format of WAV, WMA, MP3 and triple-play). In this case, the predetermined slide show setting screen is displayed on the display section 5, using the data edit section 8, as required, in Step S302. The operation section 6 is used to select the image data to be displayed for slide show; to set the order of display; to select the music/sound data (the music/sound data used to create the moving image data reproduced by the image reproducing equipment 21 can be the same as or different from the music/sound data recorded on the music reproducing equipment 22); to set the slide effect; and to select the moving image data to be reproduced together with the slide show. Then in Step 303, the data conversion section 9 allows the moving image data is created from the still image data, based on the setting conditions edited by the data edit section 8, using such a technique as that of adding the differential data based on the slide effect predetermined, to the still image data, and permits it to be converted into the data of the format (Video-CD format, DVD-Video format and HDTV format) that can be scanned by the image reproducing equipment 21.

The second embodiment refers to the data format where the inputted music/sound data can be reproduced by the music reproducing equipment 22, but the image data cannot be reproduced by the image reproducing equipment 21 without conversion (e.g. image data in the format of JPEG, BMP, JIF, TIFF, Exif, RAW, data with dubbing, AVI, MOV, MPEG1, 2, 4 and 7, or WMV; and music/sound data in the format of Audio-CD, DVD-Audio, MP3 or WAV). In this case, similarly to the case of the first embodiment, the data edit section 8 is used to display the predetermined slide show setting screen on the display section 5 in Step S304 as required. The operation section 6 is used to select the image data to be displayed for slide show; to set the order of display; to select the music/sound data to set the slide effect; and to select the moving image data to be reproduced together with the slide show. Then in Step S305, the data conversion section 9 allows the moving image data to be created from the still image data, based on the setting conditions edited by the data edit section 8, and permits it to be converted into the data of the format (Video-CD format, DVD-Video format and HDTV format) that can be scanned by the image reproducing equipment 21. Further, if the music/sound data inputted as required is of the MP3 format and the music reproducing equipment 22 is a CD player, or when the inputted music/sound data is of the Audio-CD or DVD-Audio format, and the music reproducing equipment 22 is an MP3 player, the data conversion section 9 is used to convert between the Audio-CD or DVD-Audio format and MP3 format.

The third embodiment refers to the data format where the inputted data can be reproduced by the image reproducing equipment 21, but the music/sound data cannot be reproduced by the music reproducing equipment 22 without conversion (e.g. image data in the format of Video-CD, DVD-Video or HDTV; and music/sound data in the format of WAV, WMA, MP3 or triple-play). In this case, in Step S306, the data conversion section 9 allows only the music/sound data to be converted into the format (e.g. Audio-CD, DVD-Audio, MP3) that can be reproduced by the music reproducing equipment 22.

When the data format is so arranged that the inputted image data and music/sound data can be reproduced by the image reproducing equipment 21 and music reproducing equipment 22 (e.g. image data in the format of Video-CD, DVD-Video or HDTV; and music/sound data in the format of Audio-CD, DVD-Audio or MP3: 4th embodiment), the data for the music reproducing equipment and that for the image reproducing equipment are written after conversion into the format of the data inputted in Steps S303, S305 and S306, but in the case of the image reproducing equipment 21 as shown in the first embodiment, the order of seeking data is already set, and the data cannot be scanned by the image reproducing equipment 21, depending on the area for recording the data. To avoid this problem, the order of recording is controlled in such a way that the data for image reproducing equipment is recorded in the predetermined area (inner side for the disk-shaped recording medium, generally).

To put it more specifically, in Step S307, the data transfer section 10 transfers the following data to the folder predetermined in the storage section 12 for writing; the moving image data for image reproducing equipment 20 inputted by the data input section 7, the moving image data for image reproducing equipment 21 converted by the data conversion section 9, application for reproducing the still image data, or the file group for image reproducing equipment such as associated data. Then in Step S308, the data recording section 11 scans the file group for image reproducing equipment from this folder, and the file group is recorded on the inner side (image reproducing equipment file group recording area 17a) of the output recording medium 17 such as a CD-R/RW, DVD±R/RW, DVD-RAM or Blu-ray disk loaded in the image forming section 4, as shown in Fig. 15.

Then in Step S309, to identify the area of the data usable by the image reproducing equipment 21, the data recording section 11 closes the session is closed once before recording the data for music reproducing equipment 22.

In Step S310, the data transfer section 10 transfers the music/sound data for music reproducing equipment 22 inputted by the data input section 7 or the music/sound data for music reproducing equipment 22 converted by the data conversion section 9, and the file group for music reproducing equipment such as application for music reproducing equipment 22 for reproduction of music/sound data, to the predetermined folder for writing provided in advance on the storage section 12. Then in Step S311, the data recording section 11 scans the file group for music reproducing equipment from this folder and records it in the area (file group recording area for music reproducing equipment 17c) outside the file group for image reproducing equipment previously recorded in the output recording medium 17, as shown in Fig. 15.

In this embodiment, a one-touch creation button 23 as shown in Fig. 13 can also be provided at a desired position of the operation section 6 or display section 5 of the input data recording apparatus 1. When the one-touch creation button 23 has been pressed, the image data and music/sound data is automatically scanned from the input media 13 loaded in the input media loading section 2a, the input recording medium 14 loaded in the input recording medium loading section 2b or the portable equipment connected to the equipment interface 3. An instruction is issued control various sections to ensure the moving image data for the slide show is created under the predetermined conditions, and is converted into the predetermined data format to be recorded in the predetermined area of the output recording medium 17. Thus, it is possible to create the output recording medium 17 that can be easily reproduced by both the computer equipment 20 and image recording apparatus 21, merely by pressing the one-touch creation button 23 after loading the input media 13 in Step S301.

As described above, in the input data recording apparatus 1 of the present embodiment, consideration is given to the order of seeking data of the equipment, and control is made in such a way that, in the case of the equipment where data is read from inside the disk-shaped recording medium such as the DVD player, DVD recorder or game machine, for example, the file group for image reproducing equipment is written in the inner area of the output recording medium 17, then the file group for music reproducing equipment is written in the outer area. Because of this arrangement, using the output recording medium 17, a user can play back the music based on the music/sound data by both the image reproducing equipment 21 and music reproducing equipment 22.

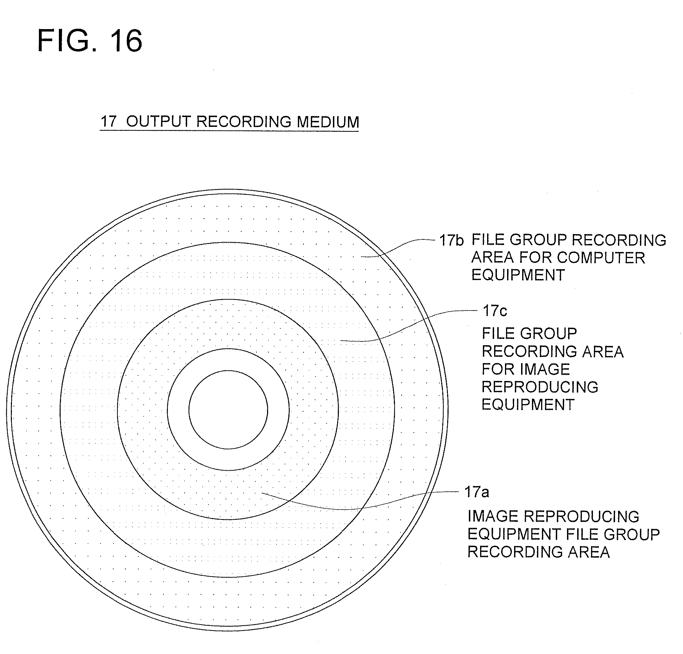

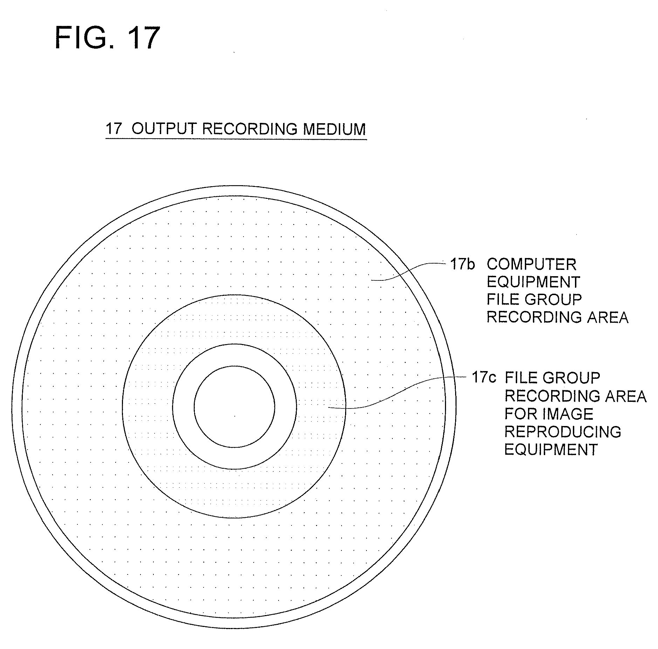

In the aforementioned embodiment, configuration is designed in such a way that the inputted data is stored as two types of data; the data for computer equipment or music reproducing equipment and the data for image reproducing equipment. Giving consideration to the user wishing to record the data for only one type of equipment, it is also possible to arrange such a configuration as to permit selection between the data for both types of equipment and that for one type of equipment. In the present invention, it is sufficient if the configuration allows recording of a plurality of types of data that can be reproduced by different equipment. It is also possible to make such arrangements as to record data of other than the aforementioned equipment. Further, the configurations of the first and second embodiments are combined to arrange such a configuration as to record three types of data for computer equipment, music reproducing equipment and image recording apparatus as shown in Fig. 16, or even more than three types of data. As shown in Fig. 17, it is also possible to arrange such a configuration that the data for music reproducing equipment (data of Audio-CD and DVD-Audio format) is recorded in the inner area and the data for computer equipment (e.g. music reproducing equipment such as WAV that cannot be reproduced by the music reproducing equipment) on the outer area.

As described above, the input data recording apparatus and input data recording program of the present invention allow the data to be recorded on the disk-shaped recording medium so that it can be reproduced by both image reproducing equipment such as a DVD player, a DVD recorder, and a game console, or computer equipment such as a personal computer, or sound reproducing equipment such as a CD player and MP3 player.

This is because two files groups of a computer equipment file group and a image reproducing equipment file group are controlled, with consideration given to the order of seeking data in the image reproducing equipment, in such a way that the image reproducing equipment file group is recorded in the inner area of the output recording medium, whereas the computer equipment file group is recorded in the outer area, with the result that image data can be reproduced by both types of equipment. This arrangement ensures that the image data obtained by scanning a photographic film or captured by a digital camera can be used in a variety of forms, whereby services related to photographic images can be promoted to a large extent.

With consideration given to the order of seeking data in the image reproducing equipment, two types of file groups such as the file group for music reproducing equipment and the file group for image reproducing equipment are controlled in such a way that the file group for the image reproducing equipment is recorded on the inner side the output recording medium and that for music reproducing equipment outside it. This arrangement allows music to be reproduced by two types of equipment based on the music/sound data. Thus, the music/sound data downloaded from the Internet, music/sound data recorded on the music CD and many other forms of data can be utilized, and use of music-related services is encouraged.

An output recording medium with a desired data file recorded thereon can be easily created by providing the input data recording apparatus with a means (button displayed on the screen, physical special-purpose button, etc.) for issuing the instruction signal to implement, in one operation, a series of processing including the input and conversion of the file group for image reproducing equipment and the file group for computer equipment or the file group for music reproducing equipment by an input section or date conversion section, as well as recording on the output recording medium by a data recording section.

## Claims

1. An input data recording apparatus comprising;
an input device to input a data file of a specific type and data files of other types,
a data transfer device to transfer the inputted data file of specific type and data files of other types to a data file in a data storage device,
a data reading device to read the transferred data file of specific type and data files of other types to a data file from the data storage device, and
a data recording device to record the read data file of specific type and data files of other types on a disk-shaped recording medium,
wherein the data recording device refer to the order of data seek in the data reproducing apparatus that reproduce the data file of specific type, and records the data of the data file of specific type in the area that can be scanned by the data reproducing apparatus.

2. An input data recording apparatus comprising;
an input device to input a data file of specific type and data files of other types,
a data transfer device to transfer the inputted data file of specific type and data files of other types to a data file in a data storage device,
a data reading device to read the transferred data file of specific type and data files of other types to the data file from the data storage device, and
a data recording device to record the read data file of specific type and data files of other types on a disk-shaped recording medium,
wherein the data file of specific type is recorded in the area inside the area for recording the data files of other types on the disk-shaped recording medium.

3. An input data recording apparatus comprising;
an input device to input a plurality of types of data files,
a data transfer device to transfer the inputted plurality of types of data files to a data file in a data storage device,
a data reading device to read the transferred plurality of types of data file from the data storage device, and
a data recording device to record the read plurality of types of data files on a disk-shaped recording medium,
wherein the data recording device refer to the order of data seek in the data reproducing apparatus that reproduce a data file of specific type in the plurality of types of data file, and records the data of the data file of specific type in the area that can be scanned by the data reproducing apparatus.

4. An input data recording apparatus comprising;
an input device to input a plurality of types of data files, wherein the data files includes a specific type of data file and other types of data file,
a data transfer device to transfer the inputted plurality of types of data files to a data file in a data storage device,
a data reading device to read the transferred plurality of types of data file from the data storage device, and a data recording device to record the plurality of types of data files on a disk-shaped recording medium,
wherein the data file of specific type is recorded in the area inside the area for recording the data files of other types on the disk-shaped recording medium.

5. The input data recording apparatus of claim 3, further comprising of:
a data conversion device for converting the inputted data file into the specific type of data file.

6. The input data recording apparatus of claim 1, wherein the data file of a specific type includes at least one of the data file of Video-CD format, and the Video-CD format, and HDTV format, the data files of other types includes at least one of the data file that can be scanned by a computer and the data file regarding a music/sound data.

7. The input data recording apparatus of claim 1, further comprising:
an instruction signal device for performing a processing in one operation, wherein the processing including inputting of data file by the input device, or inputting of data file by the input device, conversion of the data file by the data conversion device, and recording of the data file onto the disk-shaped recording medium by the data recording device.

8. The input data recording method comprising steps of:
inputting a data file of a specific type and data files of other types,
transferring the inputted data file of specific type and data files of other types to a data storage device,
reading the transferred data file of specific type from the data storage device,
recording the read data file of specific type on a disk-shaped recording medium, so that the recorded area on the disk-shaped medium can be scanned by the data reproducing apparatus is restricted,
reading the transferred data files of other types from the data storage device, and
recording the read data files of other types on a disk-shaped recording medium.

9. An input data recording method comprising steps of;
inputting a data file of specific type and data files of other types,
transferring the inputted data file of specific type and data files of other types to a data file in a data storage device,
reading the transferred data file of specific type and data files of other types to the data file from the data storage device, and
recording the read data file of specific type and data files of other types on a disk-shaped recording medium,
wherein the data file of specific type is recorded in the area inside the area for recording the data files of other types on the disk-shaped recording medium.

10. An input data recording method comprising steps of;
inputting a plurality of types of data files,
transferring the inputted plurality of types of data files to a data file in a data storage device,
reading the transferred plurality of types of data file from the data storage device, and
recording the read data file of specific type in the plurality of types on a disk-shaped recording medium, so that the recorded area on the disk-shaped medium can be scanned by the data reproducing apparatus is restricted,
reading the transferred data files of other types from the data storage device, and
recording the read data files of other types on a disk-shaped recording medium.

11. An input data recording method comprising steps of;
inputting a plurality of types of data files, wherein the data files includes a specific type of data file and other types of data file,
transferring the inputted plurality of types of data files to a data file in a data storage device,
reading the transferred plurality of types of data file from the data storage device, and
recording the read plurality of types of data files on a disk-shaped recording medium,
wherein the data file of specific type is recorded in the area inside the area for recording the data files of other types on the disk-shaped recording medium.

12. The input data recording method of claim 10, wherein the data file of a specific type includes at least one of the data file of Video-CD format, and the Video-CD format, and HDTV format, the data files of other types includes at least one of the data file that can be scanned by a computer and the data file regarding a music/sound data.
